# FASCICULE DE BREVET EUROPEEN

(11) **EP 1 364 190 B1**
(45) Date de publication et mention de la délivrance du brevet: **17.09.2008**
(21) Numéro de dépôt: 02701387.9
(22) Date de dépôt: 01.02.2002
(51) Int. Cl.: G01J 3/26

(54) **DISPOSITIF OPTOELECTRONIQUE A FILTRAGE DE LONGUEUR D'ONDE PAR COUPLAGE DE CAVITES**
OPTOELEKTRONISCHE VORRICHTUNG ZUR WELLENLÄNGENFILTERUNG DURCH KAVITÄTENKOPPLUNG
OPTOELECTRONIC DEVICE WITH WAVELENGTH FILTERING BY CAVITY COUPLING

(30) Priorité: 05.02.2001 FR 0101520
(43) Date de publication de la demande: 26.11.2003
(73) Titulaire: CENTRE NATIONAL DE LA RECHERCHE SCIENTIFIQUE, 75794 Paris Cedex 16 (FR); ECOLE CENTRALE DE LYON, 69131 Ecully Cédex (FR)
(72) Inventeur: VIKTOROVITCH, Pierre, F-69160 Tassin La Demi-Lune (FR); GARRIGUES, Michel, F-69890 La Tour de Salvagny (FR); LECLERCQ, Jean-Louis, F-69480 Morance (FR)
(74) Mandataire: Ramey, Daniel
(86) Numéro de dépôt international: PCT/FR2002/000402
(87) Numéro de publication internationale: WO 2002/063256

(56) Documents cités:
- EP-A- 0 903 615
- WO-A-98/17968
- WO-A1-98/14804
- US-A- 5 103 340
- US-A- 5 225 930
- US-A- 5 914 804
- LAMPERSKI J: "Discretely tunable multi cavity FFP filter for standard WDM frequency grid" 2000 PROCEEDINGS. 50TH ELECTRONIC COMPONENTS AND TECHNOLOGY CONFERENCE (CAT. NO.00CH37070), 2000 PROCEEDINGS. 50TH ELECTRONIC COMPONENTS AND TECHNOLOGY CONFERENCE, LAS VEGAS, NV, USA, 21-24 MAY 2000, pages 1572-1575, XP002178773 2000, Piscataway, NJ, USA, IEEE, USA ISBN: 0-7803-5908-9
- SALEH A A M ET AL: "TWO-STAGE FABRY-PEROT FILTERS AS DEMULTIPLEXERS IN OPTICAL FDMA LAN'S" JOURNAL OF LIGHTWAVE TECHNOLOGY, IEEE. NEW YORK, US, vol. 7, no. 2, 1 février 1989 (1989-02-01), pages 323-330, XP000006106 ISSN: 0733-8724
- SPISSER A ET AL: "HIGHLY SELECTIVE AND WIDELY TUNABLE 1.55-MUM INP/AIR-GAP MICROMACHINED FABRY-PEROT FILTER FOR OPTICAL COMMUNICATIONS" IEEE PHOTONICS TECHNOLOGY LETTERS, IEEE INC. NEW YORK, US, vol. 10, no. 9, 1 septembre 1998 (1998-09-01), pages 1259-1261, XP000783228 ISSN: 1041-1135 cité dans la demande
- JAIN A K ET AL: "Dual tunable Fabry-Perot spectrally agile filter" OPTICAL ENGINEERING, MARCH-APRIL 1984, USA, vol. 23, no. 2, pages 159-166, XP000997092 ISSN: 0091-3286
- GUNNING W: "Double-cavity electrooptic Fabry-Perot tunable filter" APPLIED OPTICS, 1 SEPT. 1982, USA, vol. 21, no. 17, pages 3129-3131, XP000997094 ISSN: 0003-6935

## Description

L'invention concerne le domaine du filtrage optique sélectif par modulation électrique de la fonction de transfert spectrale.

Elle concerne plus particulièrement, bien que de façon non exclusive, les dispositifs optoélectroniques de filtrage, accordables électriquement, destinés au démultiplexage en longueur d'onde des canaux de certaines installations de télécommunication par voie optique, et notamment les installations utilisant des systèmes de multiplexage connus sous les acronymes anglais WDM (pour Wavelength Division Multiplexing) et DWDM (pour Dense Wavelength Division Multiplexing).

Pour assurer ce type de démultiplexage, il a été proposé des filtres de type Fabry-Pérot comportant une cavité résonante d'air, placée entre des réflecteurs partiels. L'accordabilité en longueur d'onde de ces filtres est obtenue par déplacement de l'un au moins des réflecteurs partiels, monté de façon élastique, sous l'effet d'une pression électrostatique.

Des dispositifs de ce type sont décrits, notamment, dans les documents mentionnés ci-après :
- M.S.Wu, G.S.Yuen et C.J. Chang-Hasnain, « Widely tunable 1.5 µm micromechanical optical filter using AlOx/AlGaAs DBR", Electronics Letters 33, 1702 (1997) ;
- P.Tayebati, P.Wang, D.Vakhshoori et R.N.Sacks, « Microelectromechanical tunable filters with 0.47 nm linewidth and 70 nm tuning range », Electronics Letters 34, 76 (1998), et « Widely tunable Fabry-Perot filter using Ga(Al)As-AlOx deformable mirrors », IEEE Photonics Technology Letters 10, 394 (1998) ;
- P.Tayebati, P.Wang, M.Azimi, L.Maflah, D.Vahshoori, « Microelectromechanical tunable filters with stable half symmetric cavity », Electronics Letters 34, 1967 (1998) ;
- A.Spisser, R.Ledantec, C.Seassal, J.L.Leclercq, T.Benyattou, D.Rondi,.R.Blondeau, G.Guillot et P.Viktorovitch, « Highly selective 1.55 µm InP/Air-gap micromachined Fabry-Perot Filter For Optical Communications », Electronics Letters 34, 453 (1998) ;
- A.Spisser, R.Ledantec, C.Seassal, J.L.Leclercq, T.Benyattou, D.Rondi, R.Blondeau, G.Guillot et P.Viktorovitch, « Highly selective and widely tunable 1.55 µm InP/Air-gap micromachined Fabry-Perot Filter For Optical Communications », IEEE Photonics Technology Letters, 10 (9), 1259 (1998) ;
- US 6,078,395 (Jourdain et al.) 20 juin 2000.

Ces dispositifs à une seule cavité résonnante ne peuvent cependant pas offrir simultanément, pour des raisons théoriques, une séparation convenable entre canaux adjacents (typiquement supérieure à -20 dB) et une bande passante utile suffisante à la transmission, sans atténuation, d'une modulation rapide du signal lumineux (typiquement supérieure à 10 GHz).

On sait que des filtres convenables, c'est à dire possédant une bande passante plus "rectangulaire" sont obtenus en utilisant plusieurs cavités Fabry-Pérot couplées entre elles. Un filtre à deux cavités couplées permet par exemple de répondre aux spécifications des systèmes WDM actuels pour une longueur d'onde fixée. Des solutions ont déjà été proposées pour réaliser l'accordabilité de filtres à deux cavités couplées.

Ainsi, le document US 5,103,340 propose de coupler deux cavités d'air résonantes, dites « épaisses », du fait qu'elles présentent des épaisseurs optiques de mλ/2 et nλ/2, m et n étant des entiers de valeurs voisines de 100 et suffisamment proches pour présenter des longueurs d'onde de résonance communes, espacées. L'épaisseur de chaque cavité est ici contrôlée par un actionneur piézo-électrique commun, disposé de sorte que les déplacements des deux cavités soient proportionnels aux entiers m et n. Il est toutefois assez difficile d'accorder simultanément les deux cavités et l'encombrement de ces dispositifs est un obstacle à la haute intégration. De plus, ces dispositifs requièrent des tensions de commande élevées, typiquement de l'ordre de quelques centaines de volts, qui rendent leur utilisation difficile, voire impossible, dans des environnements où les niveaux de consommation d'énergie sont réduits.

L'article scientifique de Lamperski J., « Discretely Tunable Multi Cavity FFP Filter for Standard WDM Frequency Grid », 2000 Proceedings. 50th Electronic Components and Technology Conference (Cat. No.00CH37070), 2000 Proceedings. 50th Electronic Components and Technology Conference, Las Vegas, N V, U SA, 2 1-24 M ay 20000, p ages 1572-1575, XP 002178773 2000, P iscataway, NJ, U SA, IEEE, USA, U SA ISBN : 0-7803-5908-9, décrit un filtre de Fabry-Perot accordable à fibre optique, comprenant plusieurs cavités de résonance ayant des longueurs différentes accordées et dont les variations sont identiques et commandées simultanément par un transducteur piézoélectrique.

Le document WO98/14804 - A1 décrit un filtre optique accordable à deux cavités résonantes dont les épaisseurs sont égales à un multiple d'une demi-longueur d'onde, ce multiple étant égal à 1, 2 ou 3, et sont réglables de façon indépendante par des moyens électrostatiques.

L'invention a pour but de remédier à tout ou partie des inconvénients précités.

Elle propose à cet effet un dispositif optoélectronique comprenant des premiers moyens définissant une première cavité résonante, des seconds moyens définissant une seconde cavité résonante, des moyens de couplage optique desdits premiers et seconds moyens, ce dispositif optoélectronique de filtrage, comprenant des premiers moyens (1, 3, 4, 12, 13) définissant une première cavité résonante (1, 11), des seconds moyens (7 - 9 , 18, 19, 37) définissant une seconde cavité résonante (6, 17), des moyens de couplage optique des deux cavités résonantes, et des moyens électrostatiques agencés pour appliquer aux seconds moyens définissant la seconde cavité résonante une tension électrique pour faire varier l'épaisseur de cette seconde cavité, caractérisé en ce que la première cavité (1, 11) est une cavité dite « épaisse » présentant une multiplicité de modes résonants de transmission sur une plage de longueurs d'onde choisie, la seconde cavité (6, 17) est une cavité dite « mince » présentant un unique mode résonant de transmission sur la plage choisie de longueurs d'onde et en ce que les moyens électrostatiques précités permettent de faire varier la position spectrale de cet unique mode résonant pour le faire coïncider avec l'un quelconque des modes résonants de la première cavité et réaliser un filtre sélectif dans ladite plage choisie de longueurs d'onde.

Il suffit dans le dispositif selon l'invention, d'accorder la seconde cavité sur un mode résonant coïncidant avec l'un des multiples modes résonants de la première cavité, ce qui est beaucoup plus simple que d'accorder simultanément les deux cavités et est réalisable avec des moyens simples. Le couplage optique d es d eux cavités permet la transmission d e signaux bien "rectangulaires", conformes aux normes des systèmes WDM et DWDM.

On entend ici par "moyens de couplage optique", tout ce qui permet une interaction optique entre les cavités mince et épaisse. Par ailleurs, on entend par « l'un quelconque » le fait de sélectionner en fonction des besoins un mode ou un autre de la première cavité par un contrôle de l'épaisseur de la seconde cavité. En d'autres termes, n'importe lequel des modes de la première cavité peut être choisi selon les besoins.

De la sorte, les deux cavités mince et épaisse couplées réalisent un filtre dont la longueur d'onde de transmission peut être réglée de façon discontinue sur chacune (ou au moins un certain nombre) des longueurs d'onde des différents modes de transmission de la cavité épaisse. La caractéristique spectrale de la fonction de transmission ainsi réalisée est celle d'un filtre à deux cavités couplées, et présente donc des caractéristiques de réjection et de bande passante très supérieures à celles d'un filtre à une seule cavité.

Dans un mode de réalisation avantageux, l'épaisseur et la composition de la première cavité (épaisse) sont choisies de sorte que la multiplicité de ses modes résonants de transmission définisse un peigne dont la position des modes et la distance entre modes voisins (ou pas inter-modes) sont choisies de manière à coïncider respectivement avec la position et la distance des longueurs d'onde du signal lumineux que l'on veut démultiplexer, telles qu'elles sont définies par les normes internationales (telles que l'ITU).

Préférentiellement, les premiers moyens qui définissent la première cavité (épaisse) comprennent deux réflecteurs partiels, sensiblement parallèles, espacés l'un de l'autre par une première couche de matière (de préférence semi-conductrice) dont l'épaisseur fixe la position des modes résonants de la première cavité, et qui assurent la résonance de cette première cavité.

Egalement de préférence, les seconds moyens qui définissent la seconde cavité (mince) comprennent au moins deux réflecteurs partiels, sensiblement parallèles, espacés l'un de l'autre par une seconde couche de matière (de préférence une lame d'air) dont l'épaisseur définit la position du mode résonant de la seconde cavité, et qui assurent la résonance de cette seconde cavité.

Selon une autre caractéristique de l'invention, les moyens électrostatiques sont réalisés en connectant électriquement chacun des deux miroirs partiels des seconds moyens à une première et une deuxième électrodes de telle sorte que lorsqu'une différence de potentiel est appliquée entre lesdites première et seconde électrodes, l'épaisseur de la cavité d'air située entre les deux réflecteurs (ou miroirs) partiels change. Dans un mode de réalisation, particulier, les seconds moyens sont configurés de manière à définir au moins une sous-structure de type jonction PIN ou NIP. Dans ce cas, la jonction PIN, respectivement NIP, est polarisée en inverse par les moyens électrostatiques.

Avantageusement, les réflecteurs partiels sont des réflecteurs de Bragg constitués d'au moins une alternance de type quart d'onde de deux matériaux d'indices de réfraction différents. Ces alternances peuvent concerner par exemple des couches de Silicium et de Dioxyde de Silicium et/ou des couches d'air et de semi-conducteur (comme décrit dans les articles de Spisser et al cités dans l'introduction).

Avantageusement, les premiers et second moyens sont composés de matériaux semi-conducteurs, et préférentiellement des matériaux de type III-V, tels que l'arséniure de gallium (GaAs), l'InGaAs, ou le phosphure d'indium (InP). Cela permet d'utiliser des techniques d'épitaxie et d'attaque chimique sélective, notamment lorsque la seconde cavité (mince) est une lame (ou couche) d'air et/ou que les réflecteurs qui l'entourent sont des réflecteurs de type Bragg formés par des alternances de couches semi-conductrices et d'air (éventuellement remplacé par un autre matériau fluide, gaz, liquide ou polymère).

Dans un mode de réalisation avantageux, les moyens de couplage des cavités mince et épaisse sont des troisièmes moyens (par exemple une couche de matière ou une lame d'air) interposés entre les premiers et les seconds moyens (et notamment entre deux réflecteurs) et présentant des dimensions choisies de manière à assurer un couplage optique optimal entre les première et seconde cavités. Suivant les principes de réalisation des filtres à cavité Fabry-Pérot bien connus de l'homme de l'art,(voir par exemple H. A. Macleod, Thin-film optical filters. New York: McGraw-Hill, 1986), les moyens de couplage peuvent être constitués par exemple d'une couche de type quart d'onde.

Le dispositif peut également comprendre des moyens permettant de décaler la fréquence de la multiplicité des modes résonants de transmission des premiers moyens. De préférence, le décalage de fréquence est obtenu par une variation contrôlée de la température des premiers moyens (au moins).

D'autres caractéristiques et avantages de l'invention apparaîtront à l'examen de la description détaillée ci-après, et des dessins annexés, sur lesquels :
- la figure 1 est une vue schématique en coupe transversale d'un premier mode de réalisation d'un dispositif de filtrage selon l'invention,
- la figure 2 est une vue schématique en coupe transversale d'un second mode de réalisation d'un dispositif de filtrage selon l'invention,
- la figure 3 est une représentation graphique de la fonction de transfert (transmittance) du dispositif de la figure 2, en fonction de la longueur d'onde,
- la figure 4 est une représentation graphique de la fonction de transfert (transmittance) du dispositif de la figure 2 après réduction de l'épaisseur de sa cavité mince, en fonction de la longueur d'onde, et
- la figure 5 est une représentation graphique de la bande passante du dispositif de la figure 2.

Les dessins annexés sont, pour l'essentiel, de caractère certain. En conséquence, ils pourront non seulement servir à compléter l'invention, mais aussi contribuer à sa définition, le cas échéant.

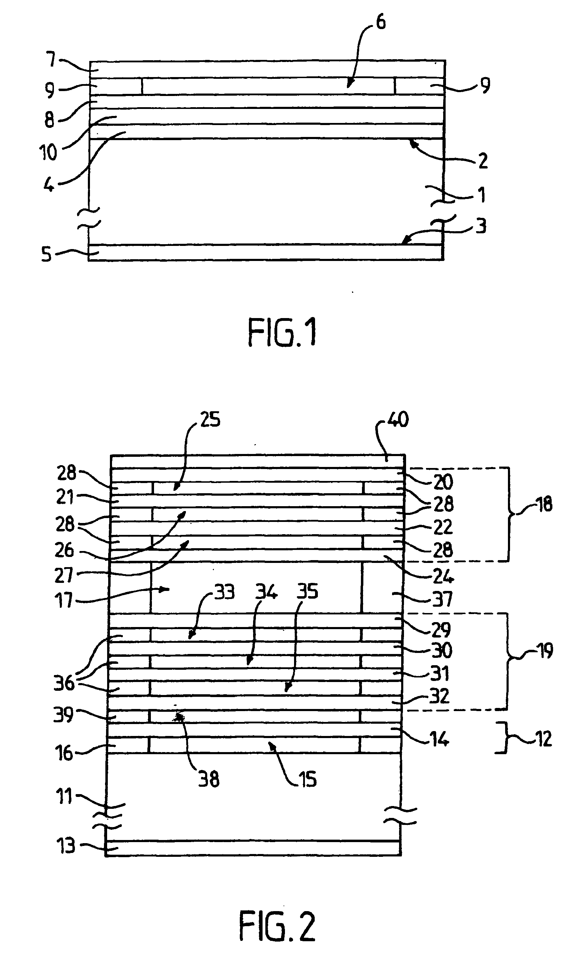

On se réfère tout d'abord à la figure 1 pour décrire un premier mode de réalisation d'un dispositif de filtrage selon l'invention, destiné au traitement optique d'une lumière externe.

Dans l'exemple illustré, le dispositif comporte une première cavité résonante épaisse 1, réalisée sous la forme d'une couche de matière, de préférence semi-conductrice. Cette couche, qui définit la première cavité résonante 1, comporte deux faces d'extrémité, sensiblement parallèles, que l'on qualifiera ici de « face supérieure » 2 et « face inférieure » 3. La face supérieure 2 est solidarisée à un réflecteur (ou miroir) partiel 4, que l'on qualifiera de « miroir supérieur », tandis que la face inférieure 3 est solidarisée à un réflecteur (ou miroir) partiel 5, que l'on qualifiera de « miroir inférieur ».

Ces deux miroirs supérieur 4 et inférieur 5 sont dits partiels car ils permettent l'obtention de modes résonants de transmission dans la première cavité épaisse 1.

La première cavité 1 est dite « épaisse » car elle présente une multiplicité de modes résonants de transmission espacés régulièrement les uns des autres en définissant un peigne de pas inter-modes constant.

Le nombre de modes résonants de transmission, ainsi que le pas entre ces modes dépend directement de l'épaisseur de la première cavité 1 et du matériau qui la forme.

Dans une cavité résonante épaisse, le pas fréquentiel Δf est relié à la vitesse de la lumière dans le vide (c) et à l'épaisseur optique (x) de la cavité épaisse par la relation : Δf = c/2x.

Ainsi, si l'on souhaite obtenir un pas inter-modes de 200 GHz, il faut prévoir une cavité épaisse dont l'épaisseur optique x est de 750 micromètres (µm) dans le vide (x = c/2*200.10⁹).

Par exemple, si la première cavité épaisse 1 est réalisée dans une couche semi-conductrice telle que le phosphure d'indium (InP), dont l'indice de réfraction est de l'ordre de 3,15 autour d'une longueur d'onde de 1,5 µm, l'épaisseur effective de la cavité doit donc être égale à 238 µm (750 / 3,15). Une telle épaisseur correspond avantageusement à l'épaisseur normale d'un substrat semi-conducteur tel qu'on peut le trouver dans le commerce.

Le dispositif selon l'invention comporte également une seconde cavité résonante 6, mince (ou fine), encadrée par deux réflecteurs (ou miroirs) partiels que l'on qualifiera ici de « miroir supérieur » 7 et de « miroir inférieur » 8.

Dans l'exemple illustré sur la figure 1, la seconde cavité 6 est de préférence évidée et remplie d'une lame (ou couche) d'air. L'épaisseur de la seconde cavité mince 6 est fixée par l'épaisseur d'espaceurs 9 interposés entre les miroirs supérieur 7 et inférieur 8. L'épaisseur de la lame d'air est égale à kλ/2, k étant de préférence un entier égal à un, deux ou trois, et λ étant la longueur d'onde centrale souhaitée du mode résonant de transmission de cette cavité mince.

La lame d'air pourrait être remplacée par une lame de tout autre matériau de propriétés mécaniques aptes à supporter une déformation importante sans introduire de contraintes sensibles (vide partiel, matériaux gazeux, liquide ou gélifié, par exemple).

Les miroirs partiels 7 et 8 qui encadrent la seconde cavité 6, ainsi que les espaceurs 9, sont de préférence réalisés à partir de matériaux semi-conducteurs. Du fait que le miroir supérieur 7 est placé au-dessus d'une cavité évidée, il constitue une lame dite « suspendue ».

Comme on le verra plus loin, la partie évidée qui reçoit la lame d'air 6 est préférentiellement réalisée à l'aide d'un procédé de micro-usinage de surface permettant d'éliminer sélectivement une couche sacrificielle solide séparant les miroirs supérieur 7 et inférieur 8 et qui constitue en fin de procédé les espaceurs 9.

La seconde cavité 6 est dite « mince » car elle ne possède qu'un unique mode résonant de transmission, bien entendu choisi dans l'intervalle des longueurs d'onde de travail (lumière incidente).

Pour que le dispositif de filtrage selon l'invention puisse, sur commande, transmettre une onde lumineuse incidente dont la longueur d'onde correspond à l'un des modes résonants du peigne de la première cavité 1, il faut que la longueur d'onde du mode résonant de transmission de la seconde cavité mince 6 coïncide avec ledit mode résonant dudit peigne. Pour obtenir cette coïncidence sur l'un quelconque des modes du peigne, on ajuste électriquement l'épaisseur de la seconde cavité mince 6, à l'aide d'électrodes ou contacts ohmiques (non représentés) placés en des endroits choisis du dispositif. Ces contacts ohmiques sont de préférence réalisés en alliage de type AuGe, ou bien Pd-AuGe, ou encore Ti-Pt-Au. Ils sont destinés à provoquer une différence de potentiel entre les miroirs supérieur 7 et inférieur 8 qui encadrent la seconde cavité 6. Ils sont par conséquent placés au contact des couches qui forment les miroirs 7 et 8 ou bien des couches (7 et 5) placées aux deux extrémités du dispositif ou bien sur chaque couche, ou bien encore sur les couches d'extrémité et sur certaines couches intermédiaires.

Cette différence de potentiel choisie, entre le miroir supérieur 7 (suspendu) et le miroir inférieur 8, induit une pression électrostatique qui déplace ledit miroir supérieur 7 relativement au miroir inférieur 8, occasionnant ainsi une variation d'épaisseur de la seconde cavité 6 et par conséquent une variation de la longueur d'onde de son mode résonant de transmission initial.

Bien entendu, pour obtenir ce déplacement relatif de l'un des miroirs par rapport à l'autre, il est important que le miroir suspendu que l'on déplace soit monté de façon élastique. On reviendra plus loin sur les techniques utilisées pour parvenir à ce résultat.

Comme mentionné ci-avant, les valeurs des polarisations des miroirs 7 et 8 vont définir, à un instant donné, la longueur d'onde qui va pouvoir être transmise par le dispositif de filtrage (et qui coïncide avec l'un des modes résonants de transmission de la première cavité résonante 1).

Les deux cavités 1, 6 couplées réalisent ainsi un filtre accordable dont la longueur d'onde de transmission peut être réglée de manière discontinue sur chacune, ou au moins certaines, des longueurs d'onde des modes résonants de transmission fixés par la construction de la première cavité résonante épaisse 1.

Lorsque les matériaux qui constituent les miroirs 7 et 8 et les espaceurs 9 sont des semi-conducteurs, la déformation élastique d'une lame suspendue (ou couche) peut être obtenue en présence d'au moins une sous-structure de type jonction PIN ou NIP dans le dispositif, notamment pour délimiter la seconde cavité résonante 6. Il en résulte, par conséquent, que les différentes couches semi-conductrices (et espaceurs), qui constituent dans l'exemple les miroirs partiels 7 et 8, doivent présenter des dopages particuliers de sorte que la sous-structure agisse comme une jonction PIN ou NIP, bien connue de l'homme du métier.

Lorsque le dispositif selon l'invention n'assure qu'une fonction de filtrage, une unique sous-structure de type PIN ou NIP, encadrant la seconde cavité 6, est nécessaire. Dans ce cas, tous les composants du miroir partiel supérieur 7 sont dopés de type P ou N, tandis que tous les constituants du miroir partiel inférieur 8 sont dopés de type N ou P, selon que la sous-structure est de type PIN ou NIP, et les espaceurs 9 sont constitués dans des matériaux semi-conducteurs non intentionnellement dopés, c'est-à-dire de type 1. En l'absence de polarisation, le miroir partiel supérieur 7 est dans une position de repos (ou d'équilibre). En revanche, lorsque la jonction PIN (constituée par les miroirs supérieur 7 et inférieur 8) est polarisée en inverse, le miroir supérieur 7 est attiré par le miroir inférieur 8 sur une distance choisie, dépendante des potentiels appliqués aux couches et des caractéristiques des cavités.

Les miroirs partiels de la première cavité épaisse 1 et de la seconde cavité mince 6 peuvent être de types identiques ou différents. Ils sont néanmoins préférentiellement réalisés sous la forme de réflecteurs (ou miroirs) de Bragg constitués d'alternance(s) quart d'onde de couches de type couche de silicium (Si) et couche de dioxyde de silicium (SiO2), ou couche de matériau semi-conducteur (par exemple lnP) et couche (ou lame) d'air, ou d'alternances de couches de deux semi-conducteurs différents présentant des différences d'indice suffisantes.

Le dispositif de filtrage selon l'invention peut, comme illustré sur la figure 1, comporter une couche de couplage 10 destinée à assurer le couplage optique entre les première 1 et seconde 6 cavités résonantes. Préférentiellement, cette couche de couplage 10 est placée entre le miroir inférieur 8 de la seconde cavité mince 6 et le miroir supérieur 4 de la première cavité épaisse 1. Sa fonction est d'assurer un couplage optique tel que les deux cavités interagissent de manière à présenter la caractéristique spectrale souhaitée. Suivant les principes connus de l'homme de l'art, l'épaisseur optique de cette couche 10 peut être égale à un multiple impair d'un quart de la longueur d'onde de travail. Elle est constituée préférentiellement d'un des matériaux constituant les miroirs 4 ou 8 ou d'une alternance de ces matériaux.

Pour réaliser un dispositif du type de celui illustré sur la figure 1, différentes techniques de dépôt ou d'épitaxie peuvent être envisagées, dès lors qu'elles permettent un contrôle convenable des épaisseurs des couches. On citera à titre d'exemple l'épitaxie par jet moléculaire (plus connu sous l'acronyme anglais MBE pour "Molecular Beam Epitaxy"), ou le dépôt chimique en phase vapeur d'organo-métalliques à basse pression (plus connus sous l'acronyme anglais LP-MOCVD pour "Low Pressure Metal Organic Chemical Vapor Deposition"), ou encore l'épitaxie par jet chimique sous pression (plus connue sous l'acronyme anglais CBE pour "Chemical Beam Epitaxy").

De telles techniques permettent un contrôle extrêmement précis des épaisseurs et de surcroît assurent d'excellentes qualités cristallines ainsi que des interfaces très abruptes. De plus, elles offrent un contrôle de la composition et du dopage d'une très grande précision. Enfin, elles permettent un excellent contrôle des contraintes mécaniques résiduelles.

A l'une des techniques d'épitaxie doit être associée une technique de gravure chimique pour supprimer une partie des couches sacrificielles qui seront remplacées par des lames d'air. Pour ce faire, il existe de nombreuses techniques de gravure chimique, notamment par voie humide. Elles permettent en effet un micro-usinage sélectif des parties suspendues (lame ou couche). On citera à titre d'exemple les techniques de gravure par voie humide de type FeCl3:H2O ou HF:H2O2:H2O pour le système InGaAs/InP, ou bien de type HCl:H2O ou HCl:H3PO4 pour les systèmes InAlAs/InGaAlAs et GalnP/GaAs, ou encore de type HF pour le système AlAs/GaAs.

On se réfère maintenant à la figure 2 pour décrire un second mode de réalisation d'un dispositif de filtrage selon l'invention.

Tout comme pour le premier mode de réalisation illustré sur la figure 1, le dispositif illustré sur la figure 2 comporte une première cavité épaisse 11 couplée à une seconde cavité mince 17. La première cavité épaisse 11 est ici constituée d'une couche de matière encadrée par un réflecteur (ou miroir) partiel supérieur 12 et un réflecteur (ou miroir) partiel inférieur 13.

Sur les figures 1 et 2, les échelles utilisées pour matérialiser les dimensions verticale et horizontale des différentes couches ne sont pas les mêmes.

Dans l'exemple illustré, le miroir inférieur 13 est constitué d'une alternance de couches de type silicium/dioxyde de silicium (Si/SiO2) formant un miroir de Bragg inférieur, tandis que le miroir supérieur 12 est constitué d'une alternance (au moins) d'une couche 14, de préférence semi-conductrice, et d'une couche (ou lame) d'air 15, formant également un réflecteur (ou miroir) de Bragg. L'épaisseur de la couche d'air 15 est fixée par l'épaisseur d'espaceurs 16, préférentiellement réalisés dans un matériau semi-conducteur et permettant la solidarisation de la couche définissant la première cavité épaisse 11 à la couche semi-conductrice 14 du miroir supérieur 12.

La seconde cavité résonante mince 17 est, dans cet exemple, constituée d'une couche (ou lame) d'air, encadrée par un miroir partiel supérieur 18 et un miroir partiel inférieur 19, solidarisés par l'intermédiaire d'espaceurs 37. L'épaisseur des espaceurs 37 fixe donc l'épaisseur optique de la seconde cavité 17, soit kλ/2.

Le miroir partiel supérieur 18 est ici constitué sous la forme d'un réflecteur (ou miroir) de Bragg comportant des alternances de couches, de préférence semi-conductrices, et de couches d'air. Plus précisément, dans l'exemple illustré, le miroir partiel supérieur 18 comporte quatre couches semi-conductrices 20-24 séparées les unes des autres par trois couches d'air 25-27, les épaisseurs des couches d'air étant fixées par les épaisseurs respectives d'espaceurs 28, également réalisés dans un matériau semi-conducteur, de préférence.

Bien entendu, le nombre de couches semi-conductrices et de couches d'air constituant le miroir partiel supérieur 18 peut être différent de celui mentionné ci-dessus. Par ailleurs, les couches d'air peuvent être remplacées par tout autre matériau de propriétés mécaniques aptes à supporter une déformation importante sans introduire de contraintes sensibles (matériaux gazeux, liquide ou gélifié, par exemple).

Dans l'exemple illustré sur la figure 2, le miroir inférieur 19 de la seconde cavité 17 est sensiblement identique au miroir supérieur 18 de cette même cavité. Il comporte par conséquent quatre couches, de préférence semi-conductrices, 29-32 espacées les unes des autres par trois couches (ou lames) d'air 33-35, par l'intermédiaire d'espaceurs 36, également réalisés dans un matériau semi-conducteur, de préférence.

L'épaisseur et la composition des différentes couches semi-conductrices (20-24, 29-32 et 14) et des différentes couches d'air (25-27, 33-35 et 15) des miroirs de Bragg sont choisies de manière à assurer des propriétés optiques adaptées pour la structure résonante, ainsi que des propriétés mécaniques optimales pour les couches semi-conductrices qui constituent des lames suspendues, soumises aux pressions électrostatiques par les contacts ohmiques décrits précédemment.

Plus précisément, les couches semi-conductrices (20-24, 29-32 et 14) des miroirs de Bragg ont une épaisseur optique égale à (2k+1)λ/4, avec une constante k de valeur entière, choisie en fonction de la rigidité requise. Les couches d'air (25-27, 33-35 et 15) ont une épaisseur optique égale à (2k+1)λ/4.

Préférentiellement, et comme illustré sur la figure 2, le couplage entre la première cavité épaisse 11 et la seconde cavité mince 17 est réalisé à l'aide d'une couche intermédiaire 38, ici réalisée sous la forme d'une couche (ou lame) d'air. Par conséquent, dans cet exemple, la lame semi-conductrice d'extrémité 32 du miroir inférieur 19 est solidarisée à la couche 14 du miroir supérieur 12 de la première cavité 11 par l'intermédiaire d'espaceurs 39, préférentiellement réalisés dans un matériau semi-conducteur.

Par ailleurs, et encore comme illustré sur la figure 2, on peut prévoir "au-dessus" du miroir partiel supérieur 18 de la seconde cavité 17, un filtre additionnel 40 constitué, par exemple, d'une succession de couches de silicium et de dioxyde de silicium (Si/SiO2) déposées après l'épitaxie du reste de la structure. Ce filtre additionnel peut être utilisé pour optimiser finement la fonction de transfert optique du dispositif.

Pour réaliser un dispositif du type de celui illustré sur la figure 2, on démarre initialement d'un substrat, par exemple en InP, qui définit la première cavité épaisse, puis on fait croître par épitaxie les différentes couches semi-conductrices (qui constitueront finalement les lames des miroirs et les espaceurs), par exemple en InP et InGaAs. On réalise ensuite le miroir partiel inférieur 13, ainsi qu'éventuellement le filtre additionnel 40, lorsque ceux-ci sont réalisés différemment des autres miroirs, par exemple par le dépôt d'alternances de type Si/SiO2. On effectue alors une délimitation latérale par une gravure verticale qui détermine les dimensions et la forme latérale des différentes couches du dispositif, puis, on réalise une gravure sacrificielle des couches d'lnGaAs, qui n'affecte pas les couches d'InP, pour délimiter les espaceurs.

Dans l'exemple illustré, le substrat est dopé N, respectivement P, toutes les couches du miroir partiel supérieur 18 et tous les espaceurs 28 sont dopés P, respectivement N, tandis que toutes les couches 14 et 29-32 et tous les espaceurs 16, 36, et 39 constituant le miroir partiel inférieur 19, le miroir partiel 12 et la couche de couplage 10 sont dopés N, respectivement P, l'espaceur 37 fixant l'épaisseur de la cavité mince 17 étant non intentionnellement dopé (c'est-à-dire de type I) de manière à former une sous-structure PIN, respectivement NIP, autour de la seconde cavité mince 17.

Bien entendu, le dispositif peut comporter d'autres sous-structures PIN ou NIP comme décrit plus loin.

Comme indiqué en référence à la figure 2, en polarisant en inverse une sous-structure PIN, on peut obtenir un déplacement vertical contrôlé d'une ou plusieurs de ses lames (ou couches) suspendues 20-24 et 29-32, par voie électrostatique. Plus précisément, sous l'effet de la polarisation des différentes couches ou lames, le champ électrique, qui s'établit entre deux lames adjacentes qui délimitent la seconde cavité résonante mince 17, induit une force électrostatique qui rapproche ces deux lames, diminuant ainsi la longueur d'onde du mode résonant de transmission de cette cavité 17.

Des modulations différentes et éventuellement plus complexes de la fonction de transfert du dispositif selon l'invention peuvent être obtenues en modifiant le type de dopage des différentes couches semiconductrices ou en insérant à volonté d'autres lames ou couches de matière, pour constituer d'autres sous-structures de type PIN ou NIP. Par exemple, et en référence à la figure 2 et aux dopages cités précédemment, on peut modifier le dopage des couches 24 et 29 qui délimitent la cavité résonante mince 17 en dopant la couche 24 de type N, respectivement P, et la couche 29 de type P, respectivement N. On laisse aussi l'espaceur 28 entre les couches 24 et 22 et l'espaceur 36 entre les couches 29 et 30 sans dopage intentionnel. On établit ainsi dans le dispositif un empilement en série de trois sous-structures de diodes PIN / NIP / PIN, respectivement NIP / PIN / NIP, du haut en bas de la structure.

En polarisant positivement, respectivement négativement, l'électrode supérieure par rapport à l'électrode inférieure, les deux sous-structures PIN, respectivement NIP, sont polarisées en direct et la sous-structure NIP, respectivement PIN, est polarisée en inverse, ce qui permet d'appliquer le champ électrostatique entre les deux lames adjacentes 29 et 24 qui délimitent la cavité mince 17 pour rapprocher les deux lames et diminuer la longueur d'onde du mode résonant de transmission. Inversement, en polarisant négativement, respectivement positivement, l'électrode supérieure par rapport à l'électrode inférieure, les deux sous-structures PIN, respectivement NIP, sont polarisées en inverse et la sous structure NIP, respectivement PIN, est polarisée en direct. Le champ électrostatique est donc appliqué à la fois entre les lames 22 et 24 et entre les lames 29 et 30 que l'on pourra ainsi rapprocher avec pour effet d'augmenter l'épaisseur de la cavité mince 17 donc d'augmenter la longueur d'onde du mode de résonance de transmission du dispositif. Cet effet peut être accentué en faisant les couches 22 et 30 plus épaisses que les couches 24 et 29.

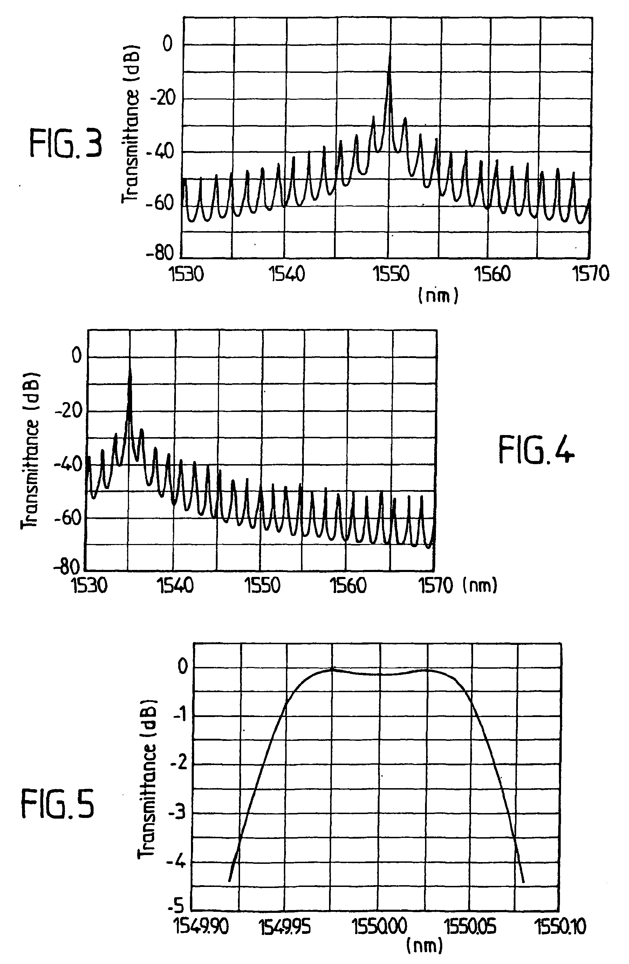

Dans le but d'illustrer pratiquement les caractéristiques de la fonction de transfert optique qui est obtenue avec un dispositif selon l'invention, des représentations graphiques de réponses spectrales, obtenues avec un dispositif de filtrage du type de celui illustré sur la figure 2, sont données sur les figures 3 à 5. Cette fonction de transfert correspond à des compositions et épaisseurs qui répondent à la formule indiquée ci-après :
O (3H L)*3 5H 2L 5H 3L (3H L)*2 3H L 1936H O S O
où H correspond à une couche quart d'onde d'InP, L correspond à une couche quart d'onde d'air, S correspond à une couche quart d'onde de silicium (Si), et O correspond à une couche quart d'onde de dioxyde de silicium (SiO2).

Ici, la longueur d'onde de référence est λ0 = 1550 nanomètres.

Il ressort de la relation donnée précédemment que la première cavité épaisse 11 présente une épaisseur de 484 λ0, ce qui correspond à un peigne de transmission dont le pas inter-modes est de 200 GHz.

Comme illustré sur la figure 3, on peut constater qu'au repos, c'est-à-dire sans variation de l'épaisseur de la seconde cavité mince 17, le filtre ne transmet qu'une unique longueur d'onde, ici de 1550nm (nanomètres), sélectionnée par la seconde cavité mince 17 parmi la multiplicité des modes résonants de transmission de la première cavité épaisse 11 (espacés de 200 GHz les uns des autres, soit environ 1,6 nm).

On peut constater également que l'atténuation des modes résonants adjacents au mode sélectionné est meilleure que -20 dB.

Si l'on se réfère maintenant à la figure 4, qui illustre la réponse spectrale du filtre après réduction, par action électrostatique, de l'épaisseur de sa cavité mince 17 de la valeur 0,5 λ0 à la valeur 0,4855 λ0, on voit que le filtre ne sélectionne toujours qu'une unique longueur d'onde, ici centrée sur la valeur 1535 nm, parmi la multiplicité des modes résonants de transmission de la première cavité épaisse 11.

La figure 5 illustre la bande-passante du filtre précité. Comme on peut le constater, cette bande-passante est de 0,1 nm à plus ou moins 1 dB, c'est-à-dire 12,5 GHz.

Bien évidemment, le nombre, l'épaisseur et la nature des différentes couches données ci-dessus, à titre d'exemple, n'est absolument pas limitatif. Une fois connu le principe de l'invention, l'homme de l'art saura déterminer les caractéristiques optimales d'un empilement de couches répondant aux spécifications recherchées en utilisant les techniques de conception et d'optimisation couramment utilisées dans le domaine des couches minces optiques.

L'exemple présenté ci-avant, concernait un peigne de pas fréquentiel inter-modes de 200 GHz. Pour des pas inter-modes sensiblement inférieurs, typiquement de l'ordre de 50 GHz, on utilise de préférence une structure du type de celles présentées sur les figures 1 et 2, couplée à un module de décalage de fréquence (non représenté) destiné à décaler de façon discrète les fréquences du peigne de la première cavité épaisse 11. Préférentiellement, le module de décalage est agencé pour faire varier la température du dispositif, et notamment celle de sa cavité épaisse 11.

A titre d'exemple, lorsque la cavité épaisse est réalisée en phosphure d'indium (InP), la longueur d'onde effective de cette cavité peut être modifiée i) par dilatation thermique, avec un coefficient de +5.10⁻⁶ /K et ii) par la variation de l'indice de réfraction avec un coefficient +5,5.10⁻⁵ /K, soit au total 6x10⁻⁵ /K. Pour une longueur d'onde de référence de 1550 nm, une variation totale de 1,6 nm (200 GHz) correspond sensiblement à 1/1000 et par conséquent nécessite un changement de température d'environ 16 Kelvins (K). Par conséquent, pour passer d'un mode résonant à un mode voisin distant de 50 GHz il faut que le module de décalage induise une variation de température de l'ordre de 4 Kelvins.

Les moyens qui permettent d'obtenir ce décalage de température, donc de longueur d'onde, peuvent être avantageusement réalisés en solidarisant le dispositif de filtrage optique suivant l'invention au contact thermique d'un dispositif thermoélectrique de régulation de température tel que ceux d'usage courant et bien connu pour la stabilisation de température des émetteurs de lumière du type laser à semi-conducteur.

Un tel dispositif peut être associé à des moyens de couplage (par exemple des fibres optiques) destinés à introduire la lumière à traiter et à collecter la lumière traitée.

Comme indiqué précédemment, le dispositif selon l'invention comporte de préférence des couches et des espaceurs réalisés dans des matériaux semi-conducteurs, et plus préférentiellement dans des matériaux semi-conducteurs de type III-V, comme par exemple l'arséniure de gallium (GaAs), le phosphure d'indium (InP) ou l'InGaAs, ou bien les hétérostructures de type InGaAs/InP ou InAlAs/InGaAlAs déposées sur un substrat d'InP, ou de type AlAs/GaAs déposées sur un substrat GaAs, ou encore de type InGaP/GaAs déposées sur un substrat GaAs.

Les matériaux de type III-V présentent des contraintes mécaniques résiduelles très faibles, mais surtout contrôlées, qui assurent aux lames suspendues une flexibilité relativement importante, indispensable à leurs déplacements électromécaniques.

Dans ce qui précède, il a été question d'exemples de réalisation dans lesquels les couches étaient réalisées dans des matériaux semi-conducteurs, du fait qu'elles étaient préférentiellement obtenues par épitaxie sur un substrat semi-conducteur. Mais, d'autres matériaux peuvent être envisagés. On citera, à titre d'exemples, le silicium cristallin et le silicium polycristallin. Les structures en silicium cristallin peuvent être obtenues à l'aide de technologies de type SOI par attaque des couches de silice (SiO2), technique plus connue sous son appellation anglaise "smart cut". Plus généralement, tout type de matériau optique peut être envisagé.

Les structures polycristallines peuvent être envisagées, mais la flexibilité des lames n'est pas très bonne du fait du mauvais contrôle des contraintes mécaniques et des possibilités d'absorption de la lumière qui limitent les applications de filtrage.

Bien entendu, ces matériaux ne constituent que des exemples préférentiels.

D'autres fonctions peuvent être envisagées pour d'autres modes de réalisation du dispositif. On citera, à titre d'exemple, la réalisation simultanée avec un seul dispositif des fonctions de filtrage et de commutation en longueur d'onde contrôlées par les tensions de polarisation appliquées aux couches semi-conductrices.

Les dispositifs selon l'invention offrent de nombreux avantages, dans la mesure où ils requièrent de faibles tensions de commande, typiquement une dizaine de volts, et présentent des dimensions réduites permettant leur utilisation dans des composants électroniques à haute intégration, et notamment pour assurer le démultiplexage en longueur d'onde des canaux de certaines installations de télécommunication par voie optique, de type WDM ou DWDM.

Mais bien d'autres applications peuvent être envisagées, comme dans le domaine du contrôle industriel (par exemple dans l'agro-alimentaire), de la microspectrométrie, notamment dans le domaine de l'environnement (détection de transmission ou d'absorption de gaz), ou encore dans le domaine de l'analyse médicale. D'une manière générale, le dispositif selon l'invention est particulièrement adapté aux traitements optiques des signaux.

L'invention ne se limite pas aux modes de réalisation de dispositif décrits ci-avant, seulement à titre d'exemple, mais elle englobe toutes les variantes que pourra envisager l'homme de l'art dans le cadre des revendications ci-après.

## Revendications

1. Dispositif optoélectronique de filtrage, comprenant des premiers moyens (1, 3, 4, 12, 13) définissant une première cavité résonante (1, 11), des seconds moyens (7 - 9 , 18, 19, 37) définissant une seconde cavité résonante (6, 17), des moyens de couplage optique des deux cavités résonantes, et des moyens électrostatiques agencés pour appliquer aux seconds moyens définissant la seconde cavité résonante une tension électrique pour faire varier l'épaisseur de cette seconde cavité, **caractérisé en ce que** la première cavité (1, 11) est une cavité dite « épaisse » présentant une multiplicité de modes résonants de transmission sur une plage de longueurs d'onde choisie, la seconde cavité (6, 17) est une cavité dite « mince » présentant un unique mode résonant de transmission sur la plage choisie de longueurs d'onde et **en ce que** les moyens électrostatiques précités permettent de faire varier la position spectrale de cet unique mode résonant pour le faire coïncider avec l'un quelconque des modes résonants de la première cavité et réaliser un filtre sélectif dans ladite plage choisie de longueurs d'onde.

2. Dispositif selon la revendication 1, **caractérisé en ce que** l'épaisseur et la composition de la première cavité (1, 11) sont choisies de sorte que ladite multiplicité de modes résonants de transmission définisse un peigne de pas inter-modes choisi.

3. Dispositif selon la revendication 2, **caractérisé en ce que** le mode résonant de la seconde cavité (6, 17) est centré sur une longueur d'onde de 1550nm et le pas des modes résonants de la première cavité (1, 11) est de 1,6nm.

4. Dispositif selon l'une des revendications 1 à 3, **caractérisé en ce qu'**une partie au moins des premiers (1, 3, 4, 12, 13) et seconds (7-9, 18, 19, 37) moyens sont composés de matériaux semi-conducteurs.

5. Dispositif selon l'une des revendications 1 à 4, **caractérisé en ce que** les premiers moyens (1, 3, 4, 12, 13) comprennent deux réflecteurs partiels (3, 4, 12, 13), sensiblement parallèles, espacés l'un de l'autre par une première couche de matière d'une épaisseur définissant la position des modes résonants de la première cavité (1, 11), et assurant la résonance de cette première cavité.

6. Dispositif selon la revendication 5, **caractérisé en ce que** ladite couche de matière est une couche de matériau semi-conducteur comportant deux faces (2, 3) sensiblement parallèles et solidarisées respectivement auxdits réflecteurs partiels (4, 3).

7. Dispositif selon l'une des revendications 1 à 6, **caractérisé en ce que** les seconds moyens (7-9, 18, 19, 37) comprennent au moins deux réflecteurs partiels (7, 8, 18, 19), sensiblement parallèles, espacés l'un de l'autre par une seconde couche de matière d'une épaisseur définissant la position du mode résonant de la seconde cavité (6, 17), et assurant la résonance de cette seconde cavité.

8. Dispositif selon la revendication 7, **caractérisé en ce que** ladite couche de matière est une lame d'air, les réflecteurs partiels (7, 8, 18, 19) étant espacés l'un de l'autre par des espaceurs (9, 37).

9. Dispositif selon l'une des revendications 5 à 8, **caractérisé en ce que** lesdits réflecteurs partiels (7, 8, 18, 19), sont des réflecteurs de Bragg constitués d'alternances de type quart d'onde de deux matériaux d'indices de réfraction différents.

10. Dispositif selon la revendication 9, **caractérisé en ce que** certains au moins desdits réflecteurs de Bragg (13) sont constitués d'alternances de couches de Silicium et d'Oxyde de Silicium.

11. Dispositif selon l'une des revendications 9 et 10, **caractérisé en ce que** certains au moins desdits réflecteurs de Bragg (12, 18, 19) sont constitués d'au moins une alternance de couches d'air et de semi-conducteur, lesdites couches de semi-conducteur étant espacées les unes des autres par des espaceurs semi-conducteurs (16, 28, 36).

12. Dispositif selon l'une des revendications 1 à 11, **caractérisé en ce que** les moyens de couplage optique comprennent des troisièmes moyens (10, 38, 39) interposés entre les premiers et les seconds moyens et présentant des dimensions choisies de manière à assurer un couplage optique entre lesdites première (1, 11) et seconde (6, 17) cavités.

13. Dispositif selon la revendication 12, **caractérisé en ce que** lesdits troisièmes moyens (10) comprennent une couche de matière (10) placée entre deux réflecteurs (4, 8) appartenant respectivement aux premiers et aux seconds moyens.

14. Dispositif selon la revendication 13, **caractérisé en ce que** lesdits troisièmes moyens (38, 39) comprennent une couche d'air (38) placée entre deux réflecteurs (12, 19) appartenant respectivement aux premiers et aux seconds moyens, lesdits réflecteurs étant espacés l'un de l'autre par des espaceurs (39).

15. Dispositif selon l'une des revendications 5 à 14, **caractérisé en ce que** lesdits moyens électrostatiques comprennent une première électrode et une seconde électrode chacune au contact d'un réflecteur partiel des premiers moyens et propres à être placées à des potentiels différents choisis de manière à faire varier l'épaisseur de la cavité d'air située entre lesdits réflecteurs partiels.

16. Dispositif selon la revendication 15, **caractérisé en ce que** les seconds moyens (7-9, 18, 19, 37) définissent au moins une sous-structure de type jonction PIN ou NIP, respectivement polarisée en inverse ou en direct par lesdites première et seconde électrodes, l'un des réflecteurs comprenant des couches semi-conductrices présentant un dopage de type N, l'autre réflecteur comprenant des couches semi-conductrices présentant un dopage de type P, et les espaceurs (9, 37) délimitant la seconde cavité (6, 17) étant non intentionnellement dopés de type I.

17. Dispositif selon l'une des revendications 1 à 16, **caractérisé en ce qu'**il comprend des moyens de décalage de fréquence de la multiplicité de modes résonants de transmission des premiers moyens.

18. Dispositif selon la revendication 17, **caractérisé en ce que** les moyens de décalage de fréquence sont agencés pour faire varier la température d'au moins lesdits premiers moyens (1, 3, 4, 12, 13), de façon contrôlée.

19. Dispositif selon l'une des revendications 5 à 18, **caractérisé en ce que** les couches semiconductrices sont réalisées dans des matériaux de type III-V, en particulier arséniure de gallium (GaAs) ou en en phosphure d'indium (InP), et **en ce que** les espaceurs sont réalisés dans des matériaux de type III-V, en particulier en InGaAs.

20. Dispositif selon l'une des revendications 4 à 19, **caractérisé en ce que** lesdites couches semiconductrices et lesdits espaceurs sont réalisés par des techniques d'épitaxie et d'attaque chimique sélective.

## Claims

1. An optoelectronic filter device, comprising first means (1, 3, 4; 12, 13) that define a first resonant cavity (1; 11), second means (7-9; 18, 19, 37) that define a second resonant cavity (6; 17), means for optically coupling said first and second means, and electrostatic means designed to apply an electrical voltage to said second means defining the second resonant cavity as to vary the thickness of this second cavity, **characterized in that** the first cavity (I, II) is a "thick" cavity presenting a multiplicity of resonant transmission modes over a chosen wavelength range, the second cavity is a "thin" cavity presenting a single resonant transmission mode over the chosen wavelength range, and the said electrostatic means permit to vary the spectral position of this single resonant mode so that it coincides with any one of the resonant modes of the first cavity in order to produce a selective filter in said chosen wavelength range.

2. The device as claimed in claim 1, **characterized in that** the thickness and the composition of the first cavity (1; 11) are chosen so that said multiplicity of resonant transmission modes defines a comb of chosen intermode spacing.

3. The device as claimed in claim 2, **characterized in that** the resonant mode of the second cavity (6,17) is centered on a wavelength of 1550nm and the spacing of the resonant modes of the first cavity (I, II) is of 1.6nm.

4. The device as claimed in one of claims 1 to 3, **characterized in that** at least some of the first (1, 3, 4; 12, 13) and second (7-9; 18, 19, 37) means are composed of semiconductor materials.

5. The device as claimed in one of claims 1 to 4, **characterized in that** the first means (1, 3, 4; 12, 13) comprise two approximately parallel partial reflectors (3, 4; 12, 13) spaced apart by a first layer of material having a thickness that defines the position of the resonant modes of the first cavity {1; 11) and ensures the resonance of this first cavity.

6. The device as claimed in claim 5, **characterized in that** said layer of material is a layer of semiconductor material having two approximately parallel faces (2, 3) bonded to said partial reflectors (4, 3) respectively.

7. The device as claimed in one of claims 1 to 6, **characterized in that** the second means (7-9; 18, 19, 37} comprise at least two approximately parallel partial reflectors (7, 8; 18, 19} spaced apart by a second layer of material having a thickness that defines the position of the resonant mode of the second cavity (6; 17) and ensures the resonance of this second cavity.

8. The device as claimed in claim 7, **characterized in that** said layer of material is a layer of air, the partial reflectors (7, 8; 18, 19) being spaced apart by spacers (9; 37).

9. The device as claimed in one of claims 5 to 8, **characterized in that** said partial reflectors (7, 8; 18, 19) are Bragg reflectors consisting of quarter-wave-type alternations of two materials having different refractive indices.

10. The device as claimed in claim 9, **characterized in that** at least some of said Bragg reflectors (13) consist of alternations of silicon layers and silicon oxide layers.

11. The device as claimed in claim 9 or 10, **characterized in that** at least some of said Bragg reflectors (12, 18, 19) consist of at least one alternation of air layers and semiconductor layers, said semiconductor layers being separated from one another by semiconductors spacers (16, 28, 36).

12. The device as claimed in one of claims 1 to 11, **characterized in that** the optical coupling means comprise third means (10; 38, 39} that are interposed between the first and second means and having dimensions chosen so as to ensure optical coupling between said first (1; 11} and second (6; 17) cavities.

13. The device as claimed in claim 12, **characterized in that** said third means (10) comprise a layer of material (10} placed between two reflectors (4, 8) belonging to the first means and to the second means respectively.

14. The device as claimed in claim 13, **characterized in that** said third means (38, 39) comprise a layer of air (38) placed between two reflectors (12, 19) belonging to the first means and to the second means respectively, said reflectors being spaced apart by spacers (39).

15. The device as claimed in one of claims 5 to 14, **characterized in that** said electrostatic means comprise a first electrode and a second electrode, each in contact with a partial reflector of the first means and suitable for being placed at different potentials chosen so as to vary the thickness of the air cavity located between said partial reflectors.

16. The device as claimed in claim 15, **characterized in that** the second means (7-9; 18, 19, 37) define at least one substructure of the pin or nip junction type, reverse-biased or forward-biased by said first and second electrodes respectively, one of the reflectors including semiconductor layers having an n-type doping, the other reflector including semiconductor layers having a p-type doping, and the spacers (9; 37) that define the second cavity (6; 17) being unintentionally i-type doped.

17. The device as claimed in one of claims 1 to 16, **characterized in that** it includes means for frequency-shifting the multiplicity of resonant transmission modes of the first means.

18. The device as claimed in claim 17, **characterized in that** the frequency shift means are designed to vary the temperature of at least said first means (1, 3, 4; 12, 13) in a controlled manner.

19. The device as claimed in one of claims 5 to 18, **characterized in that** the semiconductor layers are made from III-V type materials, particularly gallium arsenide (GaAs) or indium phosphide (InP), and **in that** the spacers are made from III-V type materials, particularly InGaAs.

20. The device as claimed in one of claims 4 to 19, **characterized in that** said semiconductor layers and said spacers are produced by epitaxy and selective etching techniques.

## Patentansprüche

1. Optotelektronische Filtervorrichtung mit ersten Mitteln (1, 3, 4, 12, 13), die einen ersten Hohlraumresonator (1, 11) definieren, zweiten Mitteln (7 - 9, 18, 19, 37), die einen zweiten Hohlraumresonator (6, 17) definieren, Mitteln zur optischen Kopplung der beiden Hohlraumresonatoren und elektrostatischen Mitteln, die dazu vorgesehen sind, an die den zweiten Hohlraumresonator definierenden zweiten Mittel eine elektrische Spannung anzulegen, um die Dicke dieses zweiten Hohlraumresonators zu variieren, **dadurch gekennzeichnet, dass** der erste Hohlraum (1, 11) ein sogenannter "dickerer" Hohlraum ist, der eine Vielzahl an resonanten Übertragungsmodi über einen ausgewählten Wellenlängenbereich aufweist, der zweite Hohlraum (6, 17) ein sogenannter "dünnerer" Hohlraum ist, der einen einzigen resonanten Übertragungsmodus über den ausgewählten Wellenlängenbereich aufweist, und dass die elektrostatischen Mittel es ermöglichen, die spektrale Position dieses einzigen resonanten Modus zu variieren, um diesen in Übereinstimmung mit einem beliebigen der resonanten Modi des ersten Hohlraums zu bringen und ein selektives Filter in dem ausgewählten Wellenlängenbereich auszubilden.

2. Vorrichtung nach Anspruch 1, **dadurch gekennzeichnet, dass** die Dicke und die Zusammensetzung des ersten Hohlraums (1, 11) so gewählt sind, dass die Vielzahl an resonanten Übertragungsmodi einen Kamm ausgewählter Intermodusteilung definiert.

3. Vorrichtung nach Anspruch 2, **dadurch gekennzeichnet, dass** der resonante Modus des zweiten Hohlraums (6, 17) auf eine Wellenlänge von 1550 nm zentriert ist und die Teilung der resonanten Modi des ersten Hohlraums (1, 11) 1,6 nm beträgt.

4. Vorrichtung nach einem der Ansprüche 1 bis 3, **dadurch gekennzeichnet, dass** zumindest ein Teil der ersten (1, 3, 4, 12, 13) und zweiten (7 - 9, 18, 19, 37) Mittel aus Halbleitermaterialien besteht.

5. Vorrichtung nach einem der Ansprüche 1 bis 4, **dadurch gekennzeichnet, dass** die ersten Mittel (1, 3, 4, 12, 13) zwei im wesentlichen parallel verlaufende Teilreflektoren (3, 4, 12, 13) aufweisen, die durch eine erste Materialschicht beabstandet sind, die mit ihrer Dicke die Position der resonanten Modi des ersten Hohlraums (1, 11) definiert und die Resonanz dieses ersten Hohlraums gewährleistet.

6. Vorrichtung nach Anspruch 5, **dadurch gekennzeichnet, dass** die Materialschicht eine Schicht aus Halbleitermaterial mit zwei Seiten (2, 3) ist, die im wesentlichen parallel verlaufen und fest mit jeweiligen Teilreflektoren (4, 3) verbunden sind.

7. Vorrichtung nach einem der Ansprüche 1 bis 6, **dadurch gekennzeichnet, dass** die zweiten Mittel (7 - 9, 18, 19, 37) zumindest zwei im wesentlichen parallel verlaufende Teilreflektoren (7, 8, 18, 19) aufweisen, die durch eine zweite Materialschicht beabstandet sind, die mit ihrer Dicke die Position des resonanten Modus des zweiten Hohlraums (6, 17) definiert und die Resonanz dieses zweiten Hohlraums gewährleistet.

8. Vorrichtung nach Anspruch 7, **dadurch gekennzeichnet, dass** die Materialschicht eine Luftspalt ist, wobei die Teilreflektoren (7, 8, 18, 19) über Abstandshalter (9, 37) voneinander beabstandet sind.

9. Vorrichtung nach einem der Ansprüche 5 bis 8, **dadurch gekennzeichnet, dass** die Teilreflektoren (7, 8, 18, 19) Bragg-Reflektoren sind, die aus einer viertelwellenartigen Wechselfolge von zwei Materialien mit unterschiedlichem Brechungsindex bestehen.

10. Vorrichtung nach Anspruch 9, **dadurch gekennzeichnet, dass** zumindest bestimmte der Bragg-Reflektoren (13) aus einer Wechselfolge von Schichten aus Silizium und Siliziumoxid bestehen.

11. Vorrichtung nach einem der Ansprüche 9 und 10, **dadurch gekennzeichnet, dass** zumindest bestimmte der Bragg-Reflektoren (12, 18, 19) aus zumindest einer Wechselfolge von Luft- und Halbleiterschichten bestehen, wobei die Halbleiterschichten über halbleitende Abstandshalter (16, 28, 36) voneinander beabstandet sind.

12. Vorrichtung nach einem der Ansprüche 1 bis 11, **dadurch gekennzeichnet, dass** die optischen Kopplungsmittel dritte Mittel (10, 38, 39) aufweisen, die zwischen den ersten und den zweiten Mitteln eingefügt sind und Abmessungen aufweisen, die so gewählt sind, dass sie eine optische Kopplung zwischen dem ersten (1, 11) und dem zweiten (6, 17) Hohlraum gewährleisten.

13. Vorrichtung nach Anspruch 12, **dadurch gekennzeichnet, dass** die dritten Mittel (10) eine Materialschicht (10) enthalten, die zwischen zwei Reflektoren (4, 8) positioniert ist, die den ersten bzw. den zweiten Mitteln angehören.

14. Vorrichtung nach Anspruch 13, **dadurch gekennzeichnet, dass** die dritten Mittel (38, 39) eine Luftschicht (38) enthalten, die zwischen zwei Reflektoren (12, 19) positioniert ist, die den ersten bzw. den zweiten Mitteln angehören, wobei die Reflektoren über Abstandshalter (39) voneinander beabstandet sind.

15. Vorrichtung nach einem der Ansprüche 5 bis 14, **dadurch gekennzeichnet, dass** die elektrostatischen Mittel eine erste Elektrode und eine zweite Elektrode enthalten, die jeweils mit einem Teilreflektor der ersten Mittel in Kontakt stehen und dazu geeignet sind, an unterschiedliche Potentiale angelegt zu werden, die so gewählt sind, dass die Dicke des Lufthohlraums zwischen den Teilreflektoren variiert wird.

16. Vorrichtung nach Anspruch 15, **dadurch gekennzeichnet, dass** die zweiten Mittel (7 - 9, 18, 19, 37) zumindest eine Unterstruktur vom Typ PIN- bzw. NIP-Übergang definieren, die über die erste und die zweite Elektrode jeweils in Sperrrichtung bzw. in Durchlassrichtung gepolt ist, wobei einer der Reflektoren Halbleiterschichten enthält, die eine Dotierung vom Typ N aufweisen, wobei der andere Reflektor Halbleiterschichten enthält, die eine Dotierung vom Typ P aufweisen, und wobei die den zweiten Hohlraum (6, 17) begrenzenden Abstandshalter (9, 37) nicht bewusst mit dem Typ I dotiert sind.

17. Vorrichtung nach einem der Ansprüche 1 bis 16, **dadurch gekennzeichnet, dass** sie Mittel zur Frequenzverschiebung der Vielzahl der resonanten Übertragungsmodi der ersten Mittel enthält.

18. Vorrichtung nach Anspruch 17, **dadurch gekennzeichnet, dass** die Mittel zur Frequenzverschiebung dazu vorgesehen sind, die Temperatur zumindest eines der ersten Mittel (1, 3, 4, 12, 13) in kontrollierter Weise zu variieren.

19. Vorrichtung nach einem der Ansprüche 5 bis 18, **dadurch gekennzeichnet, dass** die Halbleiterschichten aus Materialien vom Typ III-V, insbesondere Galliumarsenid (GaAs) oder aus Indiumphosphid (InP), ausgebildet sind und dass die Abstandshalter aus Materialien vom Typ III-V, insbesondere aus InGaAs, ausgebildet sind.

20. Vorrichtung nach einem der Ansprüche 4 bis 19, **dadurch gekennzeichnet, dass** die Halbleiterschichten und die Abstandshalter durch Anwachsen und selektives Ätzen ausgebildet sind.
